# EUROPÄISCHE PATENTSCHRIFT

(11) **EP 2 781 379 B1**
(45) Veröffentlichungstag und Bekanntmachung des Hinweises auf die Patenterteilung: **11.12.2019**
(21) Anmeldenummer: 14157054.9
(22) Anmeldetag: 27.02.2014
(51) Int. Cl.: B60H 1/00, B60H 1/22

(54) **Elektrische Standheizung für ein Kraftfahrzeug**
Electric standstill heater for a motor vehicle
Chauffage électrique auxiliaire de véhicule automobile

(30) Priorität: 20.03.2013 DE 202013002716 U
(43) Veröffentlichungstag der Anmeldung: 24.09.2014
(73) Patentinhaber: Eberspächer catem GmbH & Co. KG, 76863 Herxheim (DE)
(72) Erfinder: Bohlender, Franz, 76870 Kandel (DE); Schwarzer, Andreas, 60433 Frankfurt am Main (DE); Emanuel, Dieter, 76855 Annweiler (DE)
(74) Vertreter: Grünecker Patent- und Rechtsanwälte PartG mbB

(56) Entgegenhaltungen:
- EP-A1- 1 626 231
- DE-A1- 10 229 547
- FR-A1- 2 742 384
- US-A1- 2009 020 280
- US-A1- 2010 288 745
- MOLT K: "PTC-HEIZUNG", ATZ AUTOMOBILTECHNISCHE ZEITSCHRIFT, VIEWEG PUBLISHING, WIESBADEN, DE, Bd. 100, Nr. 7/08, 1. Juli 1998 (1998-07-01), Seiten 496-498,500, XP000769039, ISSN: 0001-2785
- "IMPROVED VEHICLE HEATING USING PTC CERAMIC", AUTOMOTIVE ENGINEERING, SOCIETY OF AUTOMOTIVE ENGINEERS. WARRENDALE, US, Bd. 98, Nr. 3, 1. März 1990 (1990-03-01), Seiten 55-59, XP000121252, ISSN: 0098-2571

## Beschreibung

Die vorliegende Erfindung betrifft eine elektrische Standheizung für ein Kraftfahrzeug. Insbesondere betrifft die vorliegende Erfindung eine elektrische Luftheizung, die im Stand des Kraftfahrzeugs mit einer Kraftfahrzeugbatterie betrieben werden kann, um den Komfort für den Nutzer des Fahrzeugs zu erhöhen.

Standheizungen dienen generell zum Beheizen des Innenraums von Kraftfahrzeugen, ohne auf die Wärmeabgabe des laufenden Motors angewiesen zu sein. Herkömmliche Standheizungen sind heute meist als brennstoffbetriebene Heizungen ausgeführt. Sie werden in der Regel direkt aus dem Tank mit Treibstoff des jeweiligen Fahrzeugs betrieben. Es gibt Varianten als Luftheizer, die die Luft des Innenraums direkt beheizen, oder als Wasserheizer, die über den Kühlwasserkreislauf des Fahrzeugs in den Heizkreislauf eingebunden sind.

Alternativ kann der Betrieb einer Standheizung auch elektrisch erfolgen. Hierzu wird herkömmlich eine in einem Kraftfahrzeug eingebaute elektrische Heizvorrichtung mit einem externen Netzanschluss verbunden. Relativ einfach elektrisch zu realisieren sind reine Luftheizungen zur Komforterhöhung, bei denen elektrische Heizelemente einen von einem Gebläse erzeugten Luftstrom erwärmen. Hierbei ist keine Verbindung mit dem Kühlkreislauf des Fahrzeugs erforderlich.

Ein Nachteil elektrischer Standheizungen mit externer Spannungsversorgung besteht darin, dass diese systembedingt nur dort betrieben werden können, wo ein Netzanschluss vorhanden ist. Es ist deshalb grundsätzlich wünschenswert, elektrische Standheizungen so zu gestalten, dass diese autonom betrieben werden können. Hierzu muss eine Energieversorgung der elektrischen Heizvorrichtung aus der Kraftfahrzeugbatterie erfolgen.

Herkömmliche elektrische Bordnetze brennstoffbetriebener Kraftfahrzeuge haben eine Bordnetzspannung von 12 V (Volt). Eine typische Batteriekapazität einer Fahrzeugbatterie liegt im Bereich von etwa 80 Ah (Amperestunden). Die Batteriekapazitäten werden üblicherweise bei einer Temperatur von 25 °C angegeben. Insbesondere im Zusammenhang mit einem Einsatz der Batterie als Energiequelle für eine Standheizung ist aber zu beachten, dass die Batteriekapazität mit sinkender Temperatur erheblich sinkt. So steht etwa bei -18 °C nur noch die Hälfte der bei 25 °C gemessenen Kapazität zur Verfügung. Dies hat einen Einfluss auf die mögliche Betriebsdauer einer elektrischen Kraftfahrzeugheizung im Stand. Die Batteriekapazität muss ausreichend sein, um einerseits eine hinreichende Erwärmung des Kraftfahrzeugsinnenraums auch bei sehr niedrigen Außentemperaturen zu erreichen, insbesondere auch ein Auftauen der Windschutzscheibe zu ermöglichen. Andererseits muss garantiert werden, dass die verbleibende Batteriekapazität dann noch ausreicht, um ein sicheres Starten des Motors des Kraftfahrzeugs zu ermöglichen. Theoretische Untersuchungen zeigen, dass dies unter den Bedingungen herkömmlicher Kraftfahrzeugbordnetze nur schwer erreichbar ist. Insbesondere bei mittlerem bis strengem Frost (nach den in Mitteleuropa üblichen Maßstäben) reicht die Batteriekapazität häufig nicht aus, einerseits eine ausreichende Heizleistung abzugeben, um den Kraftfahrzeuginnenraum spürbar zu erwärmen, insbesondere dafür zu sorgen, dass die Windschutzscheibe eisfrei ist, und andererseits das Starten des Kraftfahrzeugs mit der als Starterbatterie eingesetzten Batterie sicher zu gewährleisten.

Druckschrift EP 1 626 231 A1 beschreibt eine Heizungsanordnung mit elektrischen Heizelementen, insbesondere für ein Kraftfahrzeug, die zwei Baugruppen von PTC-Heizelementen umfasst. Hierbei wird die erste Baugruppe von einer Niederspannungsquelle und die zweite Baugruppe von einer Hochspannungsquelle versorgt. Insbesondere kann die Niederspannungsquelle eine übliche Kraftfahrzeugbatterie von 12 V sein, während die Hochspannungsquelle ein öffentliches Versorgungsnetz von z. B. 230 V zum Anschluss des Kraftfahrzeugs im Standbetrieb sein kann. Es kann aber auch eine erhöhte Bordnetzspannung von z. B. 48 V als Niederspannung verwendet werden, oder die Hochspannung kann von einer Batterie eines Bordnetzes mit erhöhter Spannung von z. B. 48 V bereitgestellt werden.

Druckschrift DE 102 29 547 A1 beschreibt eine elektrische Luftheizung mit Wärmeaustauscherrippen als Widerstandsheizdraht, die als kostengünstiger Ersatz heutiger Kfz-PTC-Zuheizer gedacht ist.

Es ist Aufgabe der vorliegenden Erfindung, ein Kraftfahrzeug mit einer verbesserten elektrischen Standheizung für den Betrieb durch eine Kraftfahrzeugbatterie bereitzustellen, die in der Lage ist, hinreichend lange eine ausreichende Heizleistung abzugeben, ohne dass ein sicheres Starten des Motors gefährdet wird.

Dies wird mit den Merkmalen des Patentanspruchs 1 erreicht.

Es ist der besondere Ansatz der vorliegenden Erfindung, eine elektrische Standheizung mit PTC-Heizelementen für eine Betriebsspannung von 48 V zum Betrieb durch eine Kraftfahrzeugbatterie bereitzustellen. Die Verwendung einer gegenüber der üblichen Bordnetzspannung von 12 V viermal größeren Bordnetzspannung gestattet bei gleicher Batteriekapazität und gleicher Heizleistung einen viermal längeren Betrieb der Heizvorrichtung. Weiterhin ist der Einsatz von PTC-Heizelementen aus Sicherheitsgründen vorteilhaft, da diese aufgrund ihrer selbstregelnden Eigenschaften eine unzulässige Erwärmung verhindern, was bei einer Standheizung von besonderer Bedeutung ist, da diese in der Regel unbeaufsichtigt betrieben wird. Das Kraftfahrzeug verfügt über ein Bordnetz mit zwei verschiedenen Spannungen, wobei neben einer Bordnetzspannung von 48 V auch eine Bordnetzspannung von 12 V vorgesehen ist. In beiden Bordnetzen ist jeweils separat eine Kraftfahrzeugbatterie vorgesehen. Während im 48 V-Teilnetz Hochstromverbraucher, wie Heizung (Heiz-/Klimagerät) und Motorstarteinrichtungen vorgesehen sind, ist das 12 V-Bordteilnetz für die Versorgung von wenig Strom verbrauchenden elektrischen Komponenten vorgesehen. Dies umfasst insbesondere Komponenten der Informations- und Unterhaltungselektronik, sowie Steuereinrichtungen. Hierdurch können herkömmliche Komponenten ohne Anpassung weiterverwendet werden. Die Steuereinrichtung der elektrischen Standheizung befindet sich im 12V-Teilnetz.

Die erfindungsgemäße Standheizung ist vorzugsweise über Mobilfunk ansteuerbar. Hierzu verfügt die Standheizung über ein Mobilfunkempfangsmodul (z. B. GSM-Modul), welches Mobilfunksignale empfängt und darauf basierend Steuerbefehle an die Steuereinrichtung ausgibt. Vorzugsweise umfassen die Steuerbefehle wenigstens einen Befehl zum Einschalten der Standheizung.

Gemäß bevorzugter Ausführungsformen können weitere Vorgänge über Mobilfunk realisiert werden. Hierzu ist das Mobilfunkempfangsmodul ausgebildet, weitere Steuerbefehle auszugeben, welche z. B. eine Einstellung einer Soll-Heizleistung, eine Einstellung von Luftführungsklappen und/oder ein Abschalten der Standheizung umfassen können.

Alternativ kann die Steuerung der elektrischen Standheizung auch mit herkömmlicher Funktechnik erfolgen. Diese hat den Nachteil einer eingeschränkten Reichweite (maximal ca. 1 km). Weiterhin alternativ ist eine Steuerung des Einschaltzeitpunktes über Zeitschaltuhren möglich. Ebenfalls denkbar ist eine Kombination einer Zeitschaltuhr mit einer Funksteuerung dahingehend, dass die Zeitschaltuhr über Funk bedient wird.

Ebenfalls vorzugsweise ist die Steuereinrichtung eingerichtet, den Ladezustand der Kraftfahrzeugbatterie zu überwachen. Hierdurch kann sichergestellt werden, dass die Batteriekapazität durch den Betrieb der Standheizung nicht unter ein vertretbares Maß absinkt, insbesondere ein sicheres Starten des Motors nicht verhindert wird. Dabei ist hier vorzugsweise die Steuereinrichtung so ausgestaltet, dass sie die elektrische Standheizung automatisch abschaltet, sobald die verbleibende Kapazität der Kraftfahrzeugbatterie einen vorbestimmten Schwellwert unterschreitet, wobei dieser Schwellwert weiter vorzugsweise so festgelegt ist, dass ein sicheres Starten des Motors mit der verbleibenden Kapazität der Kraftfahrzeugbatterie noch möglich ist.

Ebenfalls vorzugsweise umfasst die Steuereinrichtung einen Timer, und schaltet die Standheizung automatisch ab, wenn nach einer vorbestimmten Zeitdauer, gezählt ab dem Zeitpunkt des Einschaltens, keine weiteren Steuerbefehle empfangen wurden. Dadurch kann in jedem Falle und auf besonders einfache Weise vermieden werden, dass die Standheizung über einen unverhältnismäßig langen Zeitraum in Betrieb beleibt, wenn z. B. ein beabsichtigter Fahrtantritt sich verzögert oder nicht erfolgt. Hierbei kann die bestimmte Zeitdauer voreingestellt sein, aber auch z. B. über Funk, insbesondere Mobilfunk, gewählt werden.

Ebenfalls vorzugsweise wird eine Innenraumtemperatur des Kraftfahrzeugs erfasst, und die Standheizung automatisch abgeschaltet, sobald die erfasste Temperatur einen voreingestellten Temperaturwert überschreitet. Auch hierdurch kann verhindert werden, dass bei Verzögerungen der Abfahrt über das erforderliche Maß hinaus Batteriekapazität verbraucht wird.

Die für die erfindungsgemäße elektrische Standheizung verwendeten PTC-Heizelemente sind speziell für die Bordnetzspannung von 48 V ausgelegt. Hierfür haben PTC-Heizelemente eine maximale Betriebsspannung im Bereich von 60 V bis 80 V und eine Durchbruchsspannung im Bereich von oberhalb von 120 V. Dabei ist die maximale Betriebsspannung Vₘₐₓ eine für jedes Heizelement festgelegte Spannung, bis zu der dieses Heizelement betrieben werden kann, wenn ein Spannungsdurchbruch sicher verhindert werden soll. Im Normalbetrieb ist ein PTC-Heizelement für eine Betriebsspannung ausgelegt, die nochmals deutlich unter der maximal möglichen Betriebsspannung Vₘₐₓ liegt. So können zum Beispiel die für eine Bordnetzspannung von 48 V ausgelegten PTC-Heizelemente im Normalbetrieb mit ca. 24V bis 60V betrieben werden; die maximale Betriebsspannung liegt dabei von 60 V bis 80 V. Der Widerstand der PTC-Heizelemente bei 25 °C, gemessen bei einer Spannung von maximal 1,5 V (üblicherweise als R₂₅ bezeichnet) liegt hierbei vorzugsweise im Bereich von 10 Ω bis 30 Ω, weiter vorzugsweise von 14 Ω bis 26 Ω.

Weiterhin sind die PTC-Heizelemente vorzugsweise so ausgelegt, dass sie eine maximale Oberflächentemperatur im Bereich 160 °C bis 180 °C erreichen können. Oberhalb dieser Temperatur erfolgt aufgrund der selbstregelnden Eigenschaften der PTC-Heizelemente (sprunghafte Erhöhung des elektrischen Widerstands oberhalb einer bestimmten Temperatur) automatisch eine starke Reduzierung der Leistungsaufnahme, so dass keine weitere Erwärmung mehr erfolgt.

Vorzugsweise liegt die Leistung der Standheizvorrichtung im Bereich zwischen ca. 800 W bis unterhalb von 2000 W. Die Zahl der Heizelemente variiert hierbei mit der installierten Leistung. Bei einer Leistung von 1000 W umfasst die elektrische Standheizung gemäß der vorliegenden Erfindung zum Beispiel 10 bis 12 PTC - Heizelemente, die jeweils über 80 W bis 100 W Leistung verfügen.

Vorzugsweise umfasst das Heiz-/Klimagerät des Kraftfahrzeugs weiterhin eine oder mehrere Luftführungsklappen. Die Steuereinrichtung ist hierbei dazu ausgebildet, den Verlauf des Luftstroms durch eine entsprechende Einstellung der Luftführungsklappen zu steuern. Weiter vorzugsweise stellt die Steuereinrichtung die Luftführungsklappen so ein, dass der erwärmte Luftstrom auf die Windschutzscheibe geleitet wird, um diese vorab von Eis zu befreien. Dies entspricht einem Einsatz der Standheizung im Defrosterbetrieb.

Die elektrische Standheizung des Heiz-/Klimageräts ist für einen Betrieb bei ausgeschalteter Zündung direkt mit der Kraftfahrzeugbatterie verbunden. In der herkömmlichen Kraftfahrzeugelektrik wird ein solcher Anschluss, bei dem auch dann elektrische Leistung verfügbar ist, wenn die Zündung ausgeschaltet und der Zündschlüssel gezogen ist, häufig als "Dauerplus" oder "Klemme 30" bezeichnet.

Vorzugsweise steuert die Steuereinrichtung die PTC-Heizelemente nach dem Einschalten bei ausgeschalteter Zündung derart an, dass sie eine vorbestimmte Sollheizleistung abgeben. Eine solche Ansteuerung ist erforderlich, um eine optimale Innenraumerwärmung zu ermöglichen, ohne die Batterie übermäßig zu belasten. Diese Ansteuerung unterscheidet sich von der Ansteuerung einer elektrischen Heizvorrichtung, die während des Betriebs des Kraftfahrzeugs als elektrischer Zusatzheizer verwendet wird. In letzterem Fall wird die Heizleistung in der Regel dadurch bestimmt, dass der Heizung der maximal mögliche Bordnetzstrom zur Verfügung gestellt wird, der nicht von anderen Verbrauchern benötigt wird. Da beim Standbetrieb keine anderen Verbraucher vorhanden sind, wird durch die Voreinstellung der Heizleistung verhindert, dass sich die Batteriekapazität zu schnell erschöpft. Deshalb wird des Weiteren vorzugsweise die vorbestimmte Sollheizleistung in Abhängigkeit von einer Information über den Ladezustand der Kraftfahrzeugbatterie festgelegt. Diese Information wird durch eine entsprechende Messung erfasst, und der Steuereinrichtung z. B. über den Fahrzeugbus zur Verfügung gestellt.

Weitere vorteilhafte Ausgestaltungen sind Gegenstand von Unteransprüchen.

Im Folgenden wird die vorliegende Erfindung anhand bevorzugter Ausführungsformen im Zusammenhang mit den beiliegenden Zeichnungen erläutert, in denen:
- Fig. 1: ein Beispiel für eine Einbausituation einer erfindungsgemäßen elektrischen Standheizung in ein Heiz-/Klimagerät eines Kraftfahrzeugs zeigt;
- Fig. 2: ein Diagramm der in einem PTC-Heizelement umgesetzten elektrischen Leistung in Abhängigkeit von der Temperatur zeigt;
- Fig. 3: den typischen Verlauf einer Widerstands-Temperatur-Kennlinie eines PTC-Elements darstellt;
- Fig. 4: die theoretisch mögliche maximale Betriebsdauer einer elektrischen Standheizung bei vollgeladener Batterie in einem Bordnetz mit 48 V Spannung und in einem Bordnetz mit 12 V Spannung einander gegenüberstellt;
- Fig. 5: ein vereinfachtes Blockschaltbild für eine Einsatzvariante einer erfindungsgemäßen Standheizung in einem Kraftfahrzeug mit einem Zwei-Spannungs-Bordnetz darstellt;
- Fig. 6: eine Darstellung der Abhängigkeit der Widerstands-Temperatur-Kennlinie eines PTC-Heizelements von der an dem PTC-Heizelement angelegten Spannung zeigt;
- Fig. 7: eine schematische Darstellung eines geschichteten Aufbaus einer Heizeinrichtung mit PTC-Heizelementen und Radiatorelementen gemäß einer Ausführungsform der vorliegenden Erfindung ist; und
- Fig. 8: eine schematische Darstellung der Wechselwirkung der Steuereinrichtung einer erfindungsgemäßen Standheizung mit den Komponenten eines Kraftfahrzeugs zeigt.

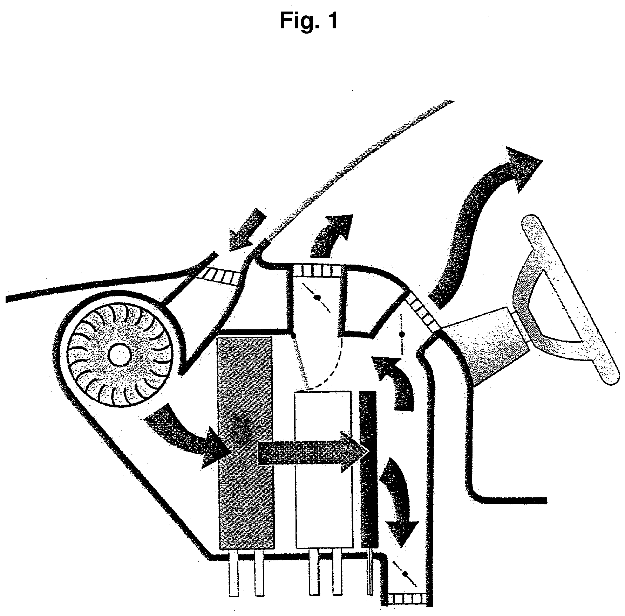

Fig. 1 zeigt den grundsätzlichen Aufbau eines Heizsystems zur Innenraumbeheizung eines Kraftfahrzeugs, welche insbesondere für die Realisierung einer Standheizung gemäß der vorliegenden Erfindung geeignet ist. Dabei ist das Heizsystem in einer KFZ-Klimaanlage (Heiz-/Klimagerät - HVAC für Heating-Ventilation-Air Conditioning) integriert. Von einem Gebläse 2 wird Außenluft 1 angesaugt, und an der Heizung 3 entlang geführt. Anschließend wird die erwärmte Luft 4 dem beabsichtigten Einsatzzweck zugeführt, indem sie in den Innenraum 5 geblasen wird. Dabei kann die Luft bei Integration in eine Klimaanlage zuvor über einen Verdampfer 6a und eine weitere Fahrzeugheizung 6b geleitet werden, bevor sie über das Heizregister 3 der elektrischen Heizvorrichtung strömt.

Für die Steuerung des Luftstroms sind darüber hinaus bewegliche Luftführungsklappen 38 vorgesehen. Durch eine entsprechende Einstellung der Luftführungsklappen kann der Luftstrom verändert werden, insbesondere kann er so gesteuert werden, dass der Luftstrom oder zumindest ein erheblicher Teil des Luftstroms von innen gegen die Windschutzscheibe strömt (im Bild oben dargestellt).

Im Rahmen der vorliegenden Erfindung werden als elektrische Heizelemente sogenannte Widerstandsheizelemente (auch bezeichnet als PTC (positive temperature coefficient)-Heizelemente) eingesetzt. Diese sind selbstregelnd, da sie mit zunehmender Erwärmung einen höheren Widerstand zeigen, und deshalb bei gleicher Spannung eine geringere Menge an Strom durchlassen. Somit heizen sich die PTC-Elemente maximal auf eine definierte Temperatur auf. Die selbstregelnden Eigenschaften der PTC-Heizelemente verhindern deshalb eine Überhitzung. Die Oberflächentemperatur eines PTC-Elements kann eine bestimmte maximale Oberflächentemperatur im Betrieb mit der vorgegebenen Betriebsspannung nicht überschreiten. Diese maximale Oberflächentemperatur ist kennzeichnend für ein PTC-Heizelement. Die von den PTC-Elementen erzeugte Wärme wird an ein fluides Medium, insbesondere an einen Luftstrom oder einen Wasserstrom, abgegeben. Bei der erfindungsgemäßen Standheizung dient ein Luftstrom als Wärmeträger.

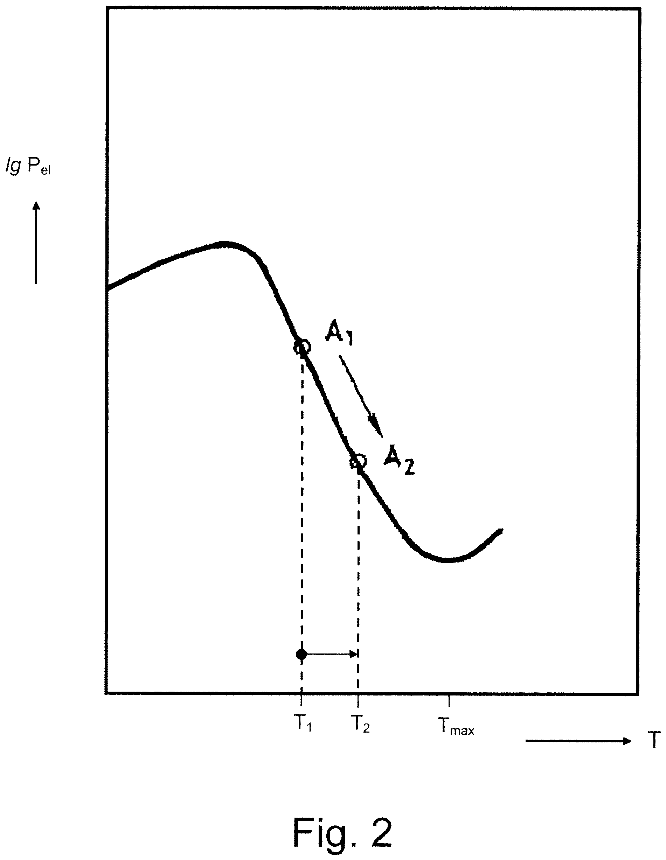

Die Temperaturabhängigkeit der von dem PTC-Element umgesetzten elektrischen Leistung Pₑₗ ist in Fig. 2 über der Oberflächentemperatur des PTC-Elementes dargestellt. Bei einer gegebenen Betriebsspannung stellt sich im PTC-Element eine Stromaufnahme (Arbeitspunkt) in Abhängigkeit von der Umgebungstemperatur, d. h. der Temperatur des aufzuheizenden Mediums (Luft), und der Wärmeleitung von PTC-Element zum aufzuheizenden Medium ein. Ein solcher Arbeitspunkt ist mit dem Arbeitspunkt A₁ bei der Temperatur T₁ in Fig. 2 dargestellt.

Tritt eine Störung im Luftstrom auf, so kann die im PTC-Element umgesetzte Wärmemenge nicht mehr abgeführt werden. Das PTC-Element nimmt dann eine höhere Temperatur ein. Der Arbeitspunkt auf der Kennlinie verschiebt sich weiter nach unten, wie in Fig. 2 mit dem neuen Arbeitspunkt A₂ bei der Temperatur T₂ angegeben. Dabei reduziert sich die Stromaufnahme deutlich und das PTC-Heizelement kann die durch die Dotierung vorgegebene maximale Temperatur Tₘₐₓ erreichen. Diese stellt die durch das elektrische Aufheizen mit der Betriebsspannung maximal erreichbare Temperatur dar. Wird die Temperatur (zum Beispiel durch externe Wärmezufuhr) künstlich weiter erhöht, so sinkt der Widerstand wieder ab und das PTC-Heizelement wird beschädigt und unbrauchbar (Kurvenstück in Fig. 2 rechts von Tₘₐₓ).

Elektrische Heizvorrichtungen mit PTC-Heizelementen regeln deshalb bei zu starker Erwärmung automatisch ab, d. h. aufgrund des erhöhten Widerstands wird die Stromaufnahme und damit die Leistungsaufnahme sehr gering. Eine noch stärkere Erwärmung wird dadurch selbst bei Ausfall der Wärme abtransportierenden Luftströmung vermieden. Dies ist für Standheizungen besonders vorteilhaft, da diese in der Regel unbeaufsichtigt betrieben werden. Bei den üblicherweise verwendeten PTC-Heizelementen liegen die maximal im Betrieb erreichbaren Oberflächentemperaturen bei höchstens etwa 180 °C.

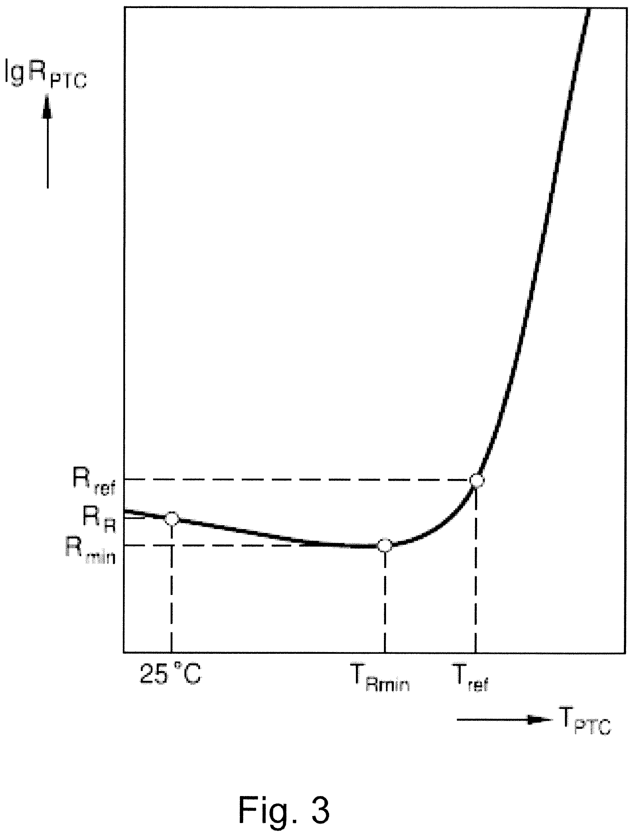

Der typische Verlauf einer weiteren für ein PTC-Heizelement charakteristischen Kurve, der Widerstands-Temperatur-Kennlinie, ist in Fig. 3 gezeigt. Bis zu einem bestimmten Temperaturwert T_{Rmin} (dieser entspricht dem Maximum der Kurve in Fig. 2) sinkt der Widerstand zunächst ab (man beachte die logarithmische Skala in den Zeichnungen der Fig. 2 und Fig. 3).

Ein wichtiger, ein bestimmtes PTC-Heizelement kennzeichnender Parameter ist dabei der Widerstand R_{R} (auch als R₂₅ bezeichnet). Dieser stellt den Widerstand des Heizelements bei einer Temperatur von 25 °C (normale Zimmertemperatur) dar. Er wird in praktisch leistungslosem Zustand gemessen, um den Einfluss der Erwärmung aufgrund des Stromflusses vernachlässigen zu können. Hierzu werden bei der Messung Spannungen von maximal 1,5 V verwendet. Bei Spannungen von 1,5 V oder darunter ist die elektrische Leistung so gering, dass eine weitere Reduzierung den Widerstand praktisch nicht verändert.

Bei weiterer Temperaturerhöhung über den Temperaturwert T_{Rmin} hinaus erfolgt ein starker Anstieg des Widerstands. Dieser Bereich entspricht dem Kurvenabschnitt mit negativem Anstieg im Bereich der Temperaturen T₁ und T₂ in dem Diagramm der Fig. 2. Der Temperaturwert T_{ref} bezeichnet diejenige Temperatur, auch als Referenztemperatur bezeichnet, bei der der Widerstandswert das Doppelte des Minimalwerts erreicht: R_{ref} = 2 x Rₘᵢₙ.

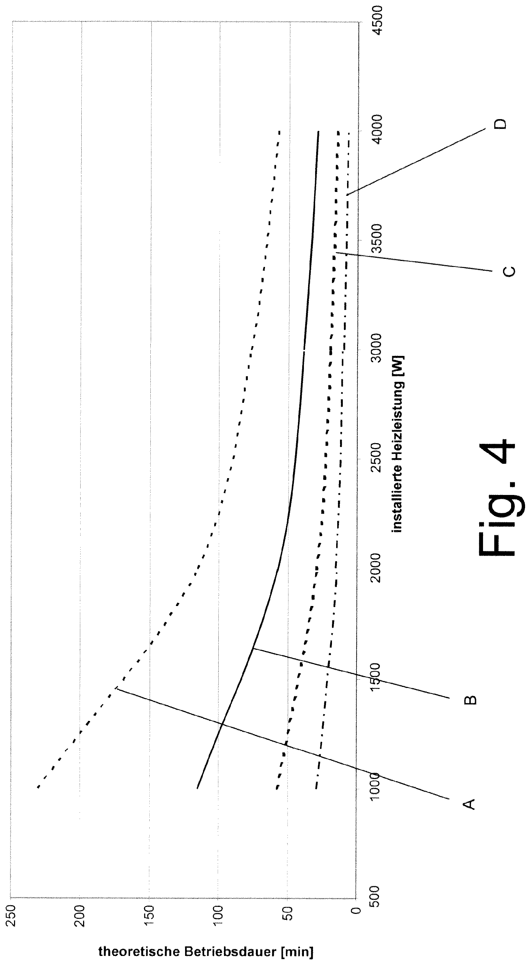

Fig. 4 zeigt die theoretische maximale Heizdauer bei gegebener Batteriekapazität in Abhängigkeit von der Heizleistungsaufnahme bei Bordnetzspannungen von 48 V und 12 V im Vergleich.

Die theoretische Betrachtung wurde hierbei für eine vollgeladene neue Batterie mit einer nominalen Batteriekapazität von 80 Ah (Amperestunden) durchgeführt. In der Praxis ist die Betriebsdauer kürzer als die maximale theoretische Betriebsdauer, weil die Batterie durch weitere elektrische Verbraucher (z. B. Anlasser, Lüfter, Bussystem, usw.) belastet wird.

In dem Diagramm zeigt die obere Kurve A die theoretische Betriebsdauer der Standheizung bei einer Bordnetzspannung von 48 V und einer Umgebungstemperatur von 25 °C. Kurve B entspricht ebenfalls einer Bordnetzspannung von 48 V, aber bei einer angenommenen Außentemperatur von -18 °C. Kurve C entspricht einer Bordnetzspannung von 12 V bei einer Außentemperatur von 25 °C und Kurve D einer Bordnetzspannung von 12 V und einer Außentemperatur von -18 °C.

Die dargestellten Kurven zeigen, dass im 48 V-Bordnetz bei gleicher Batteriekapazität Heizer mit gleicher Leistung für die vierfache Zeitdauer gegenüber einem Einsatz im 12 V-Bordnetz betrieben werden können. Weiterhin wird deutlich, dass bei einer Außentemperatur von -18 °C (gegenüber 25 °C) in etwa eine Halbierung der maximal möglichen Betriebsdauer erfolgt, da bei dieser Temperatur die verfügbare Batteriekapazität gegenüber der nominalen Batteriekapazität (entsprechend 25 °C) auf die Hälfte sinkt. Das dargestellte Verhalten beruht auf der Tatsache, dass zum Erzielen der gleichen Leistung bei vierfach höherer Spannung nur ein Viertel des Stroms erforderlich ist, und dadurch die Batterie entsprechend weniger belastet wird. Während die Kapazität üblicher Fahrzeugbatterien bei 12 V für einen Betrieb einer Standheizung normalerweise nicht ausreichend ist, ermöglicht die deutlich längere Betriebsdauer im 48 V-Bordnetz einen sinnvollen Einsatz einer autonom betriebenen elektrischen Standheizung. Wie die in Fig. 4 dargestellten Kurven weiterhin zeigen, ist der Vorteil der längeren Betriebsdauer im Bereich kleinerer Heizleistungen etwa zwischen 1000 W (Watt) und 2000 W besonders ausgeprägt. Eine erfindungsgemäße Standheizung ist deshalb insbesondere zur Komfortverbesserung in einem Heizleistungsbereich unterhalb der bei klassischen brennstoffbetriebenen Standheizungen üblichen Leistung (für Luftheizer etwa 2 kW (Kilowatt) für PKW in der gemäßigten Klimazone und 4 kW für PKW in kalten Ländern geeignet. Typische Leistungen erfindungsgemäßer Standheizvorrichtungen liegen bei ca. 800 W bis unterhalb von 2000 W, z. B. 1800 W. Hiermit lässt sich in einem typischen Anwendungsfall der Innenraum eines PKW in etwa 30 Minuten von -10 °C auf ca. 17-18 °C aufheizen.

Die Möglichkeit einer praktischen Realisierung einer erfindungsgemäßen Standheizung ist dadurch gegeben, dass in der Entwicklung der letzten Jahre ein genereller Trend hin zu höheren Bordnetzspannungen erkennbar ist. Dies ist insbesondere der Tatsache geschuldet, dass im modernen Kraftfahrzeug immer mehr leistungsstarke elektrische und elektronische Komponenten vorhanden sind. Eine höhere Spannung ermöglicht eine Realisierung der höheren Leistung mit einem deutlich niedrigeren Strom als in einem herkömmlichen 12 V-Bordnetz. Dementsprechend werden geringere Anforderungen an die Verkabelung gestellt und die vorhandene Batteriekapazität wird weniger belastet, falls die Lichtmaschine nicht genügend Leistung zur Verfügung stellen kann, insbesondere im Stand des Kraftfahrzeugs.

Es standen zunächst Überlegungen im Vordergrund, die Bordnetzspannung generell zu erhöhen (z. B. von einem 14 V- auf ein 42 V-System überzugehen). Eine solche Lösung hat jedoch den Nachteil, dass konventionelle, für eine Netzspannung von z. B. 12 V oder 14 V ausgelegte Komponenten nicht mehr weiter verwendet werden können.

Deshalb gehen aktuelle Entwicklungen davon aus, künftig Kraftfahrzeug-Bordnetze mit zwei Teilnetzen mit unterschiedlichen Spannungen (insbesondere z. B. 12 V und 48 V) vorzusehen, wobei jedes Teilnetz über eine eigene Batterie mit der jeweiligen Spannung verfügt. Das Teilnetz mit der höheren Spannung (48 V) ist dabei für die Verbraucher mit hoher Leistung vorgesehen ("Hochstromverbraucher"), also z. B. Motoren - einschließlich Anlasser, Heizungen und Generatoren.

Alternativ kann der Anlasser auch im 12 V-Teilnetz vorgesehen sein. Da dann die 12 V-Batterie als Starterbatterie fungiert, ist die zum Motorstart verfügbare Batteriekapazität unabhängig vom Betrieb der Standheizung.

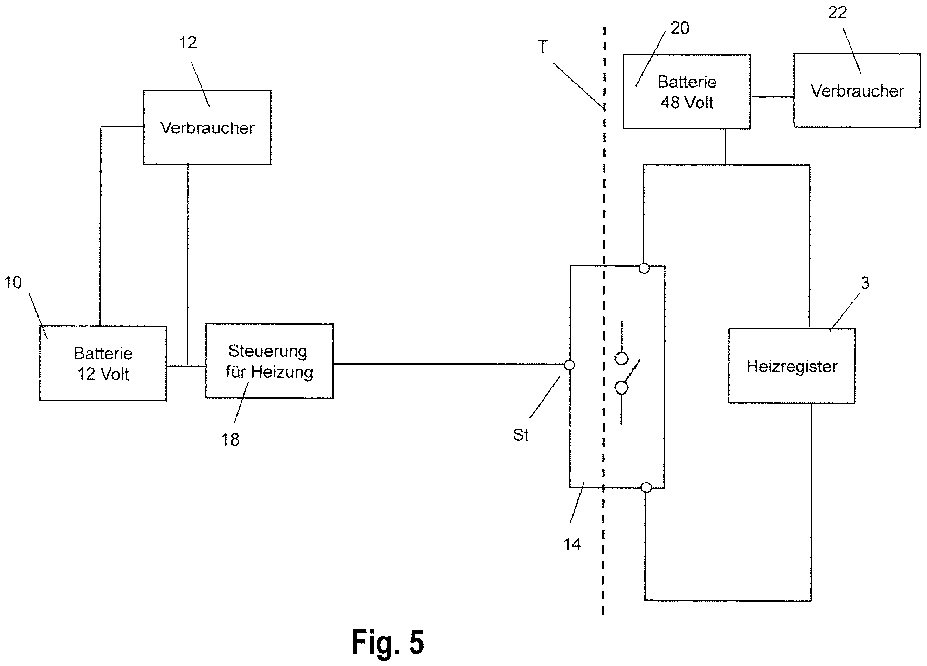

Fig. 5 ist eine Prinzipdarstellung eines Zweispannungs-Kraftfahrzeugbordnetzes mit einer elektrischen Standheizung gemäß eines Ausführungsbeispiels der vorliegenden Erfindung.

Auf der linken Seite der Zeichnung ist das Teilnetz mit der niedrigeren Spannung von 12 V schematisch dargestellt. In diesem Teil befindet sich neben der 12 V-Spannungsquelle (Batterie) 10 insbesondere eine Reihe von Verbrauchern 12 niedriger Leistung sowie Komponenten der Steuerelektronik. Insbesondere befindet sich in diesem Teil des Kraftfahrzeugbordnetzes gemäß der gezeigten Ausführungsform die Steuereinrichtung 18 der Standheizung. Die Steuereinrichtung 18 umfasst vorzugsweise einen Mikrocontroller (µC). Die vorliegende Erfindung ist jedoch nicht auf die gezeigte Ausführungsform beschränkt. Insbesondere kann die Steuereinrichtung für die Heizung in dem 48 V-Teilnetz angeordnet sein.

Das Teilnetz mit der höheren Batteriespannung (48 V) ist auf der rechten Seite der Zeichnung dargestellt. In diesem befinden sich neben der 48 V-Spannungsquelle (Batterie) 20 weitere Verbraucher (3 und 22). Diese Verbraucher schließen eine Heizvorrichtung, insbesondere eine erfindungsgemäße elektrische Standheizung 3, ein. Weitere Verbraucher sind in dem Block 22 zusammengefasst.

Hierbei erfolgt in der gezeigten Ausführungsform die Ansteuerung der Heizvorrichtung über ein Schaltelement 14, insbesondere einen Leistungshalbleiter. Das Bild zeigt der Einfachheit halber nur ein Schaltelement 14. Es können aber in analoger Weise eine Mehrzahl von Schaltelementen (Leistungshalbleitern) zum Schalten von z. B. mehreren Heizstufen vorhanden sein.

Die Grenze zwischen den Bereichen mit 12 V (links) und 48 V (rechts) wird in Fig. 5 durch die Strichlinie T symbolisiert. Diese verläuft innerhalb des Steuerelements 14 zwischen den Anschlüssen der Hochstromverbraucher, insbesondere der Heizvorrichtung einerseits und dem Steueranschluss ST andererseits. Das Schaltelement 14, insbesondere ein Leistungshalbleiter (z. B. MOSFET - Metal Oxide Semiconductor Field Effect Transistor oder IGBT - Insulated Gate Bipolar Transistor) wird aus dem 12 V-Bordnetz angesteuert, schaltet jedoch Ströme des 48 V-Bordnetzes.

Dabei wird der Strom, der die Heizleistung bestimmt, durch ein entsprechendes Signal in Form einer an den Steueranschluss angelegten Spannung ein- oder ausgeschaltet. Darüber hinaus ist es auch möglich, Teilströme zu schalten. Dies kann z. B. über eine Ansteuerung mit einer Pulsbreitenmodulation (Pulse Width Modulation - PWM) erfolgen. Hierdurch kann ein Heizstrom und somit eine Heizleistung anforderungsgemäß stufenweise oder quasi-kontinuierlich eingestellt (gesteuert) werden.

Die vorliegende Erfindung ist jedoch nicht auf den Fall eines Zweispannungsbordnetzes beschränkt. Alternativ ist ein Einsatz in einem Einspannungsbordnetz mit einer Bordnetzspannung von 48 V denkbar.

Eine weitere Besonderheit der für PTC-Heizelemente verwendeten keramischen Materialien besteht darin, dass der Widerstand nicht nur von der Temperatur, sondern darüber hinaus auch von der angelegten Spannung, genauer von der elektrischen Feldstärke, die sich durch den Spannungsabfall pro Längeneinheit des Heizelements definiert, abhängt (Varistoreffekt). Für jedes PTC-Heizelement nimmt hierbei der Widerstand mit steigender Feldstärke, also mit steigender Potentialdifferenz zwischen den Enden des Heizelements, ab. Hierbei kann der Unterschied im elektrischen Widerstand durchaus ein bis zwei Größenordnungen betragen.

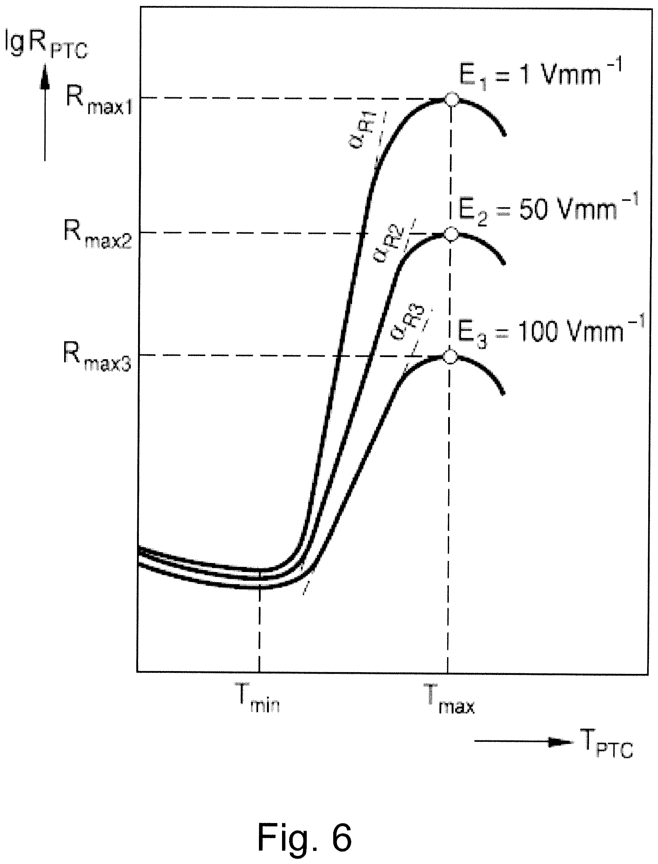

Diese Besonderheit des elektrischen Verhaltens von PTC-Heizelementen ist in Fig. 6 dargestellt. Fig. 6 zeigt eine Schar logarithmischer Widerstands-Temperaturkennlinien in Abhängigkeit von der elektrischen Feldstärke. Hierbei sind die Kennlinien in einem gegenüber der Fig. 3 verkleinerten Maßstab gezeigt, so dass die maximal erreichbare Oberflächentemperatur Tₘₐₓ, entsprechend dem Maximum der Kurven (bzw. dem Minimum der Kurve in Fig. 2) dargestellt ist. In der Grafik der Fig. 3 (mit größerem Maßstab) befindet sich dieser Punkt bereits außerhalb des im Diagramm dargestellten Bereichs. In dem Bild sind drei Kurven, entsprechend Feldstärken E₁ = 1 V/mm (Volt pro Millimeter), E₂ = 50 V/mm und E₃ = 100 V/mm dargestellt. Wie aus dem Diagramm zu entnehmen ist, verringern sich die Widerstände bei gleicher Temperatur mit wachsender Feldstärke (in dem jeweils linear ansteigenden Bereich der Kurven durch einen sinkenden (logarithmischen) Widerstands-Temperatur-Koeffizienten α_{R} bei wachsender Feldstärke gekennzeichnet. Die Lage des Widerstandsmaximums, entsprechend der maximal erreichbaren Oberflächentemperatur Tₘₐₓ bleibt jedoch gleich.

Eine Konsequenz aus dem mit steigender angelegter Spannung sinkenden Widerstand besteht darin, dass ab einem bestimmten Wert der angelegten Spannung ("Durchbruchsspannung") ein Spannungsdurchbruch des Heizelements erfolgt, wobei dieses beschädigt und unbrauchbar wird. Für jedes Heizelement ist deshalb die maximale Betriebsspannung Vₘₐₓ festgelegt, bis zu der dieses Heizelement betrieben werden kann, wenn ein Spannungsdurchbruch sicher verhindert werden soll. Im Normalbetrieb ist ein PTC-Heizelement für eine Betriebsspannung ausgelegt, die nochmals deutlich unter der maximal möglichen Betriebsspannung Vₘₐₓ liegt.

Das beschriebene Widerstandsverhalten der PTC-Heizelemente ist bei der Auswahl der Heizelemente für einen bestimmten Betriebsspannungsbereich unbedingt zu beachten. Insbesondere sind für eine elektrische Standheizung, die unter 48 V betrieben werden soll, andere Heizelemente auszuwählen, als dies für einen konventionellen 12 V-Heizer der Fall wäre.

Hierbei sind zwei gegenläufige Tendenzen zu beachten. Einerseits kann entsprechend der Formel P (Leistung) = U (Spannung) x I (Strom) bei einer höheren Spannung die gleiche geforderte Leistung mit einem geringeren Strom erreicht werden. Deshalb muss der Widerstand (bei Betriebstemperatur) des PTC-Heizelements für 48 V größer sein als derjenige eines entsprechenden PTC-Heizelements gleicher Leistung für 12 V. Andererseits ist bei ein- und demselben PTC-Heizelement aufgrund der Materialeigenschaften der Widerstand bei einer angelegten Spannung von 48 V niedriger, als bei 12 V. Es müssen für einen Betrieb unter 48 V also allgemein gesprochen PTC-Heizelemente ausgewählt werden, die zum Einen für eine Betriebsspannung im Bereich von 48 V ausgelegt sind, und zum Anderen (bei einer Vergleichsspannung von 12 V) einen deutlich höheren Widerstand aufweisen, als für eine 12 V-Heizung geeignete PTC-Heizelemente gleicher Leistung.

Als ein geeigneter Parameter zur Charakterisierung eines PTC-Heizelements erweist sich hierbei die Kenngröße R₂₅, also der Widerstand bei einer Raumtemperatur von 25 °C, gemessen unter der Bedingung derart niedriger Ströme, dass (fast) keine Heizleistung abgegeben wird, und sich das PTC-Heizelement bei der Messung praktisch nicht aufheizt. Wegen der grundsätzlichen Ähnlichkeit der Widerstands-Temperaturkennlinien ist dies eine gute Kenngröße bei der Auswahl geeigneter PTC-Heizelemente.

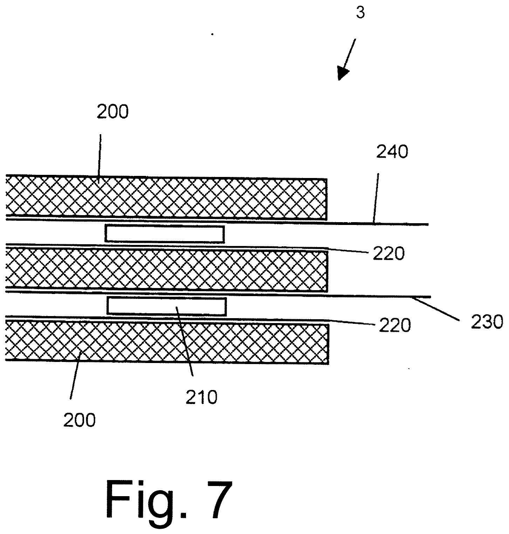

Ein geschichteter Aufbau der PTC-Heizelemente in Form eines Heizregisters 3 ist in Fig. 7 schematisch dargestellt. Die PTC-Heizelemente 210 sind jeweils zwischen Radiatorelemente 200 angeordnet. Die beiden gezeigten PTC-Heizelemente 210 stehen mit den Radiatorelementen 200 in wärmeleitender Verbindung. Über die Radiatorelemente 200 wird die vom PTC-Heizelement 210 erzeugte Wärme an die durch die Radiatorelemente 200 strömende Luft abgegeben.

Auf beiden Seiten der PTC-Heizelemente 210 sind Kontaktbleche 220, 230, 240 angeordnet. Über diese Kontaktbleche wird den PTC-Heizelementen 210 Strom zugeführt.

Der in Fig. 7 gezeigte Aufbau stellt nur schematisch ein mögliches Anordnungsprinzip gemäß einer Ausführungsform eines erfindungsgemäßen Heizers dar.

Vorzugsweise ist der Aufbau unter einer Klemmpressung gehalten, so dass ein besonders guter thermischer und elektrischer Übergang zwischen dem PTC-Heizelement 210 und den Kontaktblechen 220, 230 und 240 besteht. Die Klemmpressung kann z. B. mit zwei Federelementen realisiert werden.

Es kann aber auch ein geklebter Schichtaufbau, der an einem Rahmen gehalten ist, verwendet werden.

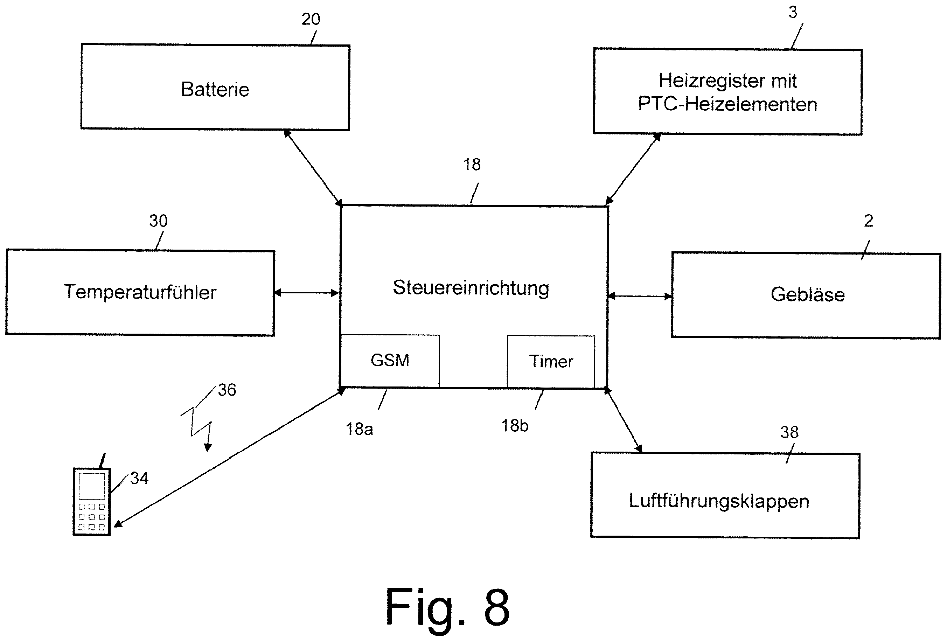

Fig. 8 zeigt schematisch die Wechselwirkung der Steuereinrichtung 18 der erfindungsgemäßen elektrischen Standheizung mit weiteren Fahrzeugkomponenten.

Aufgabe der Steuereinrichtung ist eine Steuerung des Stromflusses (mindestens das Einschalten, vorzugsweise darüber hinaus auch das Ausschalten) und damit der Heizleistung eines oder mehrerer PTC-Heizelemente 3 (vorzugsweise als Heizregister, wie beispielhaft in Fig. 7 gezeigt, ausgebildet). Dies geschieht vorzugsweise durch Anlegen eines entsprechenden Steuersignals in einen Steuereingang eines Halbleiter-Leistungsschalters, wie weiter oben im Zusammenhang mit Fig. 5 erläutert.

Für den Betrieb einer elektrischen Standheizung in Form eines Luftheizers ist darüber hinaus erforderlich, dass das Gebläse 2 zur Erzeugung des Luftstroms eingeschaltet wird. Dies geschieht durch die Steuereinrichtung 18 vorzugsweise gleichzeitig mit dem erstmaligen Einschalten des PTC-Heizelements.

Darüber hinaus ist die Steuereinrichtung 18 vorzugsweise eingerichtet, in dem Heiz-/Klimagerät befindliche Luftführungsklappen je nach Bedarf einzustellen. Insbesondere bei Frosttemperaturen kommt es entscheidend darauf an, einen hinreichend stark erwärmten Luftstrom von innen in den Bereich der Windschutzscheibe zu lenken, so dass dieser zum Defrosten der Windschutzscheibe dient. Dies setzt eine entsprechende Stellung von Luftführungsklappen voraus. Eine einfache Möglichkeit, dies zu realisieren, besteht darin, dass die Luftführungsklappen beim Einschalten des Heizgeräts im Stand des Fahrzeugs bei ausgeschalteter Zündung automatisch so angesteuert werden, dass sie eine entsprechende Position einnehmen. Darüber hinaus ist es möglich, verschiedene Betriebsmodi vorzugeben, die von einem Fahrer beim Abstellen des Fahrzeugs vorgewählt werden können. Hierbei kann z. B. insbesondere vorgesehen sein, dass zwischen einem Wintermodus, in dem die erwärmte Luft vorzugsweise an die Windschutzscheibe gelenkt wird, und einem Sommermodus mit einer anderen Stellung der Luftführungsklappen gewechselt werden kann.

Alternativ wäre es auch möglich, eine gewünschte Klappenstellung zusammen mit einem externen Einschaltsignal, z. B. über Mobilfunk, vorzugeben.

In der gezeigten Ausführungsform wird die Steuereinrichtung 18 über Mobilfunk fernbedient. Hier ist ein Mobilfunkempfangsmodul 18a, vorzugsweise ein GSM-Modul vorhanden. Dieses kann sowohl in die Steuereinrichtung 18 integriert sein, als auch außerhalb vorgesehen sein.

Grundsätzlich funktioniert die Fernbedienung über Mobilfunk so, dass das Mobilfunkempfangsmodul 18a von einem Handy 34 aus angerufen wird, und ein Mobilfunksignal 36 übertragen wird, welches entsprechende Steuerinformation enthält. Das Mobilfunkempfangsmodul 18a ist eingerichtet, die empfangene Information in ein Steuersignal umzusetzen, welches an die Steuereinrichtung 18 ausgegeben wird. Basierend auf diesen Steuersignalen (Steuerbefehlen) erfolgt wie vorstehend beschrieben eine Ansteuerung von Komponenten wie PTC-Heizelemente 3, Gebläse 2 oder Luftführungsklappen 38.

Die Handy-Fernbedienung kann z. B. über SMS (short message service) erfolgen. Alternativ kann das Mobilfunkempfangsmodul 18a auch z. B. über einen Sprachchip verfügen. Wenn das Mobilfunkempfangsmodul der Standheizung vom Handy aus angerufen wird, listet es verschiedene Optionen auf. Eine gewünschte Option kann dann über die Multifrequenzwahl des Mobiltelefons ausgewählt werden.

Die Ausführung der Steuerung per Mobiltelefon ist jedoch nicht auf die vorstehend beschriebenen Beispiele beschränkt. Mit der Entwicklung neuer Generationen von Mobilfunkgeräten, wie Smartphones, können z. B. auch Applikationen vorgesehen sein, die es einem Benutzer ermöglichen, auf einer grafischen Benutzeroberfläche Steueroptionen einer erfindungsgemäßen elektrischen Standheizung auszuwählen. Auch ist das Mobilfunksystem nicht auf GSM (Global System for Mobile Communications) beschränkt. Systeme der dritten und folgenden Generationen von Mobilfunksystemen, z. B. UMTS (Universal Mobile Telecommunications System), sind im Rahmen der Erfindung ebenfalls möglich.

Eine Alternative zu einem Mobilfunkempfangsmodul ist eine herkömmliche Funkfernbedienung (nicht dargestellt), die je nach geografischen Gegebenheiten Reichweiten von etwa 300 bis 500 m hat. Maximal kann unter optimalen Bedingungen eine Reichweite von bis zu 1000 m erreicht werden. Funkfernbedienungen können prinzipiell mit und ohne Rückmeldung ausgeführt sein.

Eine Steuerung ohne Rückmeldung (unidirektional) hat zur Folge, dass auf dem Funkfernbedienungsteil nicht angezeigt wird, ob der Funkbefehl empfangen wurde.

Bei einer Steuerung mit Rückmeldung (bidirektional) ist in der Fernbedienung zusätzlich ein Empfänger integriert, und im Fahrzeug ein Sender, der dem Empfang der Nachricht bestätigt. Bidirektionale Fernsteuerungen können im Prinzip auch beim Diagnoseergebnis der Standheizung übertragen.

Weiter alternativ ist eine Steuerung des Einschaltens über eine Zeitschaltuhr (Timer 18b) möglich. Hierbei kann entweder die Einschaltzeit der Heizung, oder die voraussichtliche Abfahrtszeit eingeschaltet werden. Im ersten Fall muss der Fahrer abschätzen, wie lange die Heizung erfahrungsgemäß braucht, um das Auto auf eine angenehme Temperatur zu bringen. Bei letzterer ermittelt die Standheizung über einen Temperatursensor 30 die voraussichtliche Heizzeit und aktiviert sich selbständig ausreichend vor dem geplanten Abfahrtmoment. Einschaltuhren der letzteren Art können auch über Funk fernbedient werden.

Ein Timer 18b kann darüber hinaus auch vorgesehen sein, um Ausschalten der Heizung (sowie vorzugsweise auch des Gebläses 2) nach einer vorbestimmten Zeit zu ermöglichen, wenn z. B. eine geplante Fahrt nicht in dem vorgesehenen Zeitbereich angetreten wird. Dadurch wird verhindert, dass die Standheizung sehr lange läuft und die Batterie unnötig belastet. Zu diesem Zweck ist das Vorhandensein eines Timers 18b auch zusätzlich zu einem Mobilfunkempfangsmodul 18a (d. h., wenn das Einschalten nicht mit Hilfe eines Timers/einer Zeitschaltuhr erfolgt) möglich und sinnvoll.

Weiter ist optional ein Temperaturfühler 30 vorgesehen, der die Temperatur des Kraftfahrzeugs im Innenraum überwacht, und der Steuereinrichtung signalisiert. Dies kann wie bereits beschrieben zum Einen zur Abschätzung einer für das Aufheizen im Stand vor der geplanten Abfahrtszeit erforderlichen Zeitdauer dienen. Andererseits kann auch die erfasste Temperatur dazu dienen, wieder abzuschalten, wenn ein vorbestimmter Temperaturwert erreicht wurde.

Darüber hinaus ist in Fig. 8 eine Kommunikation der Steuereinrichtung 18 mit der Fahrzeugbatterie 20 dargestellt. Optional ist das 48 V-Bordnetz mit einer Einrichtung zur Überwachung der aktuellen Kapazität der Batterie 20 versehen. Diese meldet der Steuereinrichtung eine aktuelle Kapazität. Darauf basierend kann die Steuereinrichtung 18 z. B. eine Heizleistung bestimmen, mit der die PTC-Standheizung betrieben werden soll. Alternativ oder zusätzlich erfolgt eine Abschaltung (oder eine Reduktion der Heizleistung), wenn die Batteriekapazität durch den Betrieb der Standheizung unter einen vorgegebenen Schwellwert sinkt.

Die Datenkommunikation der Steuereinrichtung mit den verschiedenen elektrischen und elektronischen Komponenten des Kraftfahrzeugs erfolgt vorzugsweise über das Bussystem des Kraftfahrzeugs (z. B. CAN-Bus oder LIN-Bus).

Die vorliegende Erfindung ist jedoch nicht auf die vorstehend näher beschriebenen Ausführungsbeispiele beschränkt. Übliche Modifikationen im Rahmen der Patentansprüche sind dem Fachmann gegenwärtig.

Zusammenfassend, betrifft die vorliegende Erfindung eine elektrische Standheizung zur Erwärmung eines Luftstroms mit einem oder mehreren PTC-Heizelementen, die speziell für einen Betrieb durch eine Kraftfahrzeugbatterie mit einer Bordnetzspannung von 48 V eingerichtet ist. Eine Steuereinrichtung ermöglicht es, wenigstens das Einschalten sowie vorzugsweise weitere Funktionen der elektrischen Standheizung zu steuern.

## Patentansprüche

1. Kraftfahrzeug mit einem Heiz-/Klimagerät, wobei das Heiz-/Klimagerät eine elektrische Standheizung (3, 18) für die Erwärmung eines Luftstroms (4) zum Vorwärmen des Innenraums (5) eines Kraftfahrzeugs umfasst,
wobei die elektrische Standheizung zum Anschluss an eine Batterie (20) eines Kraftfahrzeugbordnetzes ausgestaltet ist und eine Steuereinrichtung (18) zum Einschalten der elektrischen Standheizung umfasst,
**dadurch gekennzeichnet, dass**
das Kraftfahrzeugbordnetz zwei Teilnetze mit unterschiedlichen Bordnetzspannungen umfasst, wobei die Bordnetzspannung des ersten Teilnetzes 48V und die Bordnetzspannung des zweiten Teilnetzes 12V beträgt und dass
die elektrische Standheizung (3, 18) wenigstens ein PTC-Heizelement (210), das für die Bordnetzspannung von 48V angepasst ist, in dem ersten Teilnetz, umfasst,
das Heiz-/Klimagerät weiterhin ein Gebläse (2) zur Erzeugung des Luftstroms (4) umfasst, wobei
die elektrische Standheizung (3, 18) des Heiz-/Klimageräts für einen Betrieb bei ausgeschalteter Zündung direkt mit der Kraftfahrzeugbatterie (20) verbunden ist,
die Steuereinrichtung (18) weiterhin eingerichtet ist, das Gebläse (2) beim Betrieb der Standheizung (3, 18) einzuschalten und
die Steuereinrichtung Bestandteil des zweiten Teilnetzes mit 12V Bordnetzspannung ist.

2. Kraftfahrzeug nach Anspruch 1, wobei die elektrische Standheizung (3, 18) weiterhin ein Mobilfunkempfangsmodul (18a) zum Ausgeben von Steuerbefehlen an die Steuereinrichtung (18) basierend auf empfangenen Mobilfunksignalen (36) umfasst und
die ausgegebenen Steuerbefehle eine Einstellung einer Soll-Heizleistung und/oder eine Einstellung von Luftführungsklappen (38) und/oder ein Abschalten der Standheizung umfassen und
die Steuereinrichtung (18) weiterhin eingerichtet ist, die elektrische Standheizung basierend auf den Steuersignalen zu steuern.

3. Kraftfahrzeug nach Anspruch 1 oder 2, wobei die Steuereinrichtung (18) eingerichtet ist, den Ladezustand der Kraftfahrzeugbatterie (20) zu überwachen.

4. Kraftfahrzeug nach einem der Ansprüche 1 bis 3, wobei die elektrische Standheizung (3, 18) weiterhin eine Einrichtung (30) zum Erfassen einer Temperatur im Innenraum (5) des Kraftfahrzeugs, wobei die Steuereinrichtung (18) die Standheizung automatisch abschaltet, sobald die erfasste Temperatur einen voreingestellten Temperaturwert überschreitet, umfasst.

5. Kraftfahrzeug nach einem der Ansprüche 1 bis 4, wobei die maximale Betriebsspannung des wenigstens einen PTC-Heizelements (210) im Bereich von 60V bis 80V liegt.

6. Kraftfahrzeug nach einem der Ansprüche 1 bis 5, wobei die Durchbruchsspannung des wenigstens einen PTC-Heizelements (210) höher als 120V ist.

7. Kraftfahrzeug nach einem der Ansprüche 1 bis 6, wobei der Widerstand R₂₅ des wenigstens einen PTC-Heizelements (210) bei 25°C, gemessen bei einer Spannung von maximal 1,5V im Bereich von 10 Ω bis 30 Ω liegt.

8. Kraftfahrzeug nach einem der Ansprüche 1 bis 7, wobei das wenigstens eine PTC-Heizelement (210) so ausgelegt ist, dass es eine maximale Oberflächentemperatur im Bereich von 160°C bis 180°C erreichen kann.

9. Kraftfahrzeug nach einem der Ansprüche 1 bis 8 mit einer Leistung im Bereich von 800W bis 2000W.

10. Kraftfahrzeug nach einem der Ansprüche 1, 3 bis 9, wobei die elektrische Standheizung (3, 18) weiterhin ein Mobilfunkempfangsmodul (18a) zum Ausgeben von Steuerbefehlen an die Steuereinrichtung (18) basierend auf empfangenen Mobilfunksignalen (36) umfasst.

11. Kraftfahrzeug nach einem der Ansprüche 1 bis 10, wobei die Steuereinrichtung (18) eingerichtet ist, eine oder mehrere Luftführungsklappen (38) automatisch derart einzustellen, dass der erwärmte Luftstrom (4) auf die Windschutzscheibe geleitet wird.

## Claims

1. A motor vehicle with a heating/air-conditioning device, wherein the heating/air-conditioning device comprises an electrical parking heater (3, 18) for heating an air flow (4) for pre-heating the interior space (5) of a motor vehicle,
wherein the electrical parking heater is configured for connection with a battery (20) of a motor vehicle electrical system and comprises a control device (18) for turning on the electrical parking heater,
**characterized in that**
the motor vehicle electrical system comprises two subnetworks with different vehicle electrical system voltages, wherein the vehicle electrical system voltage of the first subnetwork is 48V and the vehicle electrical system voltage of the second subnetwork is 12V and that
the electrical parking heater (3, 18) comprises at least one PTC heating element (210) in the first subnetwork, which is adapted for the vehicle electrical system voltage of 48V,
the heating/air-conditioning device further comprises a blower (2) for generating the air flow (4), wherein
the electrical parking heater (3, 18) of the heating/air-conditioning device is connected directly with the motor vehicle battery (20) in order to operate with the ignition switched off,
the control device (18) is furthermore setup to turn on the blower (2) during operation of the parking heater (3, 18) and
the control device is part of the second subnetwork with a vehicle voltage of 12V.

2. The motor vehicle according to claim 1, wherein the electrical parking heater (3, 18) further comprises a mobile communications reception module (18a) for outputting control commands to the control device (18) based on received mobile communication signals (36) and
the outputted control commands comprise a setting of a target heating output and/or a setting of air guidance flaps (38) and/or a shutdown of the parking heater and
the control device (18) is furthermore setup to control the electrical parking heater based on the control signals.

3. The motor vehicle according to claim 1 or 2, wherein the control device (18) is setup to monitor the state of charge of the motor vehicle battery (20).

4. The motor vehicle according to one of the claims 1 to 3, wherein the electrical parking heater (3, 18) further comprises a device (30) for detecting a temperature in the interior space (5) of the motor vehicle, wherein the control device (18) automatically turns off the parking heater as soon as the detected temperature exceeds a preset temperature value.

5. The motor vehicle according to one of the claims 1 to 4, wherein the maximum operating voltage of the at least one PTC heating element (210) lies between 60V and 80V.

6. The motor vehicle according to one of the claims 1 to 5, wherein the breakdown voltage of the at least one PTC heating element (210) is greater than 120V.

7. The motor vehicle according to one of the claims 1 to 6, wherein the resistance R₂₅ of the at least one PTC heating element (210) at 25°C, measured at a voltage of maximum 1.5V, lies between 10 Ω and 30 Ω.

8. The motor vehicle according to one of the claims 1 to 7, wherein the at least one PTC heating element (210) is designed in such a manner that it can reach a maximum surface temperature between 160°C and 180°C.

9. The motor vehicle according to one of the claims 1 to 8 with a power between 800W and 2000W.

10. The motor vehicle according to one of the claims 1, 3 to 9, wherein the electrical parking heater (3, 18) further comprises a mobile communications reception module (18a) for outputting control commands to the control device (18) based on received mobile communications signals (36).

11. The motor vehicle according to one of the claims 1 to 10, wherein the control device (18) is setup to automatically adjust one or several air guidance flaps (38) in such a manner that the heated air flow (4) is guided toward the windshield.

## Revendications

1. Véhicule automobile avec un dispositif de chauffage et de climatisation, où le dispositif de chauffage et de climatisation comprend un chauffage auxiliaire électrique (3, 18) pour réchauffer un flux d'air (4) pour préchauffer l'intérieur (5) d'un véhicule automobile,
où le chauffage auxiliaire électrique est conçu pour être raccordé à une batterie (20) d'un réseau électrique de bord du véhicule automobile et comprend un dispositif de commande (18) pour allumer le chauffage auxiliaire électrique,
**caractérisé en ce que**
le réseau électrique de bord du véhicule automobile comprend deux sous-réseaux avec des tensions de réseau de bord différentes, où la tension de réseau de bord du premier sous-réseau est de 48V et la tension de réseau de bord du second sous-réseau est de 12V et que
le chauffage auxiliaire électrique (3, 18) comprend au moins un élément de chauffage PTC (210) dans le premier sous-réseau qui est adapté à la tension de réseau de bord de 48V,
le dispositif de chauffage et de climatisation comprend en outre un ventilateur (2) pour générer le flux d'air (4), où
le chauffage auxiliaire électrique (3, 18) du dispositif de chauffage et de climatisation est directement connecté à la batterie (20) du véhicule en vue d'un fonctionnement avec l'allumage est éteint,
le dispositif de commande (18) est en outre configuré pour allumer le ventilateur (2) lors du fonctionnement du chauffage auxiliaire (3, 18) et
le dispositif de commande fait partie du second sous-réseau ayant une tension de réseau de bord de 12V.

2. Véhicule automobile selon la revendication 1, où le chauffage auxiliaire électrique (3, 18) comprend en outre un module de réception de radiocommunication mobile (18a) pour émettre des commandes de contrôle à destination du dispositif de commande (18) en se fondant sur des signaux de radiocommunication mobile (36) reçus et
les commandes de contrôle émises comprennent un réglage d'une puissance de chauffage cible et/ou un réglage de volets de guidage de l'air (38) et/ou une mise hors tension du chauffage auxiliaire et
le dispositif de commande (18) est en outre configuré pour commander le chauffage auxiliaire électrique en se fondant sur les signaux de commande.

3. Véhicule automobile selon la revendication 1 ou 2, où le dispositif de commande (18) est configuré pour surveiller l'état de charge de la batterie (20) du véhicule automobile.

4. Véhicule automobile selon l'une des revendications 1 à 3, où le chauffage auxiliaire électrique (3, 18) comprend en outre un dispositif (30) de détection d'une température dans l'intérieur (5) du véhicule automobile, où le dispositif de commande (18) éteint automatiquement le chauffage auxiliaire dès que la température détectée dépasse une valeur de température préréglée.

5. Véhicule automobile selon l'une des revendications 1 à 4, où la tension de fonctionnement maximale de l'au moins un élément de chauffage PTC (210) est comprise entre 60V et 80V.

6. Véhicule automobile selon l'une des revendications 1 à 5, où la tension de claquage de l'au moins un élément de chauffage PTC (210) est supérieure à 120V.

7. Véhicule automobile selon l'une des revendications 1 à 6, où la résistance R₂₅ de l'au moins un élément de chauffage PTC (210) à 25°C, mesurée à une tension de maximum 1,5V, est comprise entre 10 Ω et 30 Ω.

8. Véhicule automobile selon l'une des revendications 1 à 7, où l'au moins un élément de chauffage PTC (210) est conçu de telle manière qu'il peut atteindre une température de surface maximale comprise entre 160°C et 180°C.

9. Véhicule automobile selon l'une des revendications 1 à 8 avec une puissance comprise entre 800W et 2000W.

10. Véhicule automobile selon l'une des revendications 1, 3 à 9, où le chauffage auxiliaire électrique (3, 18) comprend en outre un module de réception de radiocommunication mobile (18a) pour émettre des commandes de contrôle à destination du dispositif de commande (18) en se fondant sur des signaux de radiocommunication mobile (36) reçus.

11. Véhicule automobile selon l'une des revendications 1 à 10, où le dispositif de commande (18) est conçu pour automatiquement régler un ou plusieurs volets de guidage de l'air (38) de telle manière que le flux d'air (4) chauffé est guidé vers le pare-brise.
